# EUROPEAN PATENT APPLICATION

(11) **EP 4 614 959 A2**
(43) Date of publication of application: **10.09.2025**
(21) Application number: 23884876.6
(22) Date of filing: 30.10.2023
(51) Int. Cl.: H04N 7/14

(54) **VIDEO GENERATION METHOD AND APPARATUS, AND DEVICE AND STORAGE MEDIUM**

(30) Priority: 04.11.2022 CN 202211376541
(71) Applicant: Beijing Zitiao Network Technology Co., Ltd., Beijing 100190 (CN)
(72) Inventor: ZENG, Ping, Beijing 100028 (CN); XIE, Keyi, Beijing 100028 (CN); HE, Meng, Beijing 100028 (CN); WANG, Jiawei, Beijing 100028 (CN); SUN, Yang, Beijing 100028 (CN)
(74) Representative: Marks & Clerk LLP
(86) International application number: PCT/CN2023/127937
(87) International publication number: WO 2024/093946

(57) **Abstract**

The present disclosure provides a video generation method, apparatus and device, and a storage medium. The method includes: first, sending a video call recording application request to a server in response to a video call recording application operation acting on a video call page; next, receiving a recording termination operation for a video call picture on the video call page, and obtaining a recording result material corresponding to the video call picture from the server; and then, generating a result video corresponding to the video call picture based on a recording result material corresponding to the video call picture. It can be seen that in the embodiments of the present disclosure, during the process of a video call, the server may be requested to record the current video call, and the recording result material corresponding to the video call picture is directly obtained from the server, so that a user can generate the result video corresponding to the video call picture based on the recording result material, thereby simplifying the production process of a video of the type of a video call by the client user, and improving the user experience.

## Description

### CROSS-REFERENCE TO RELATED APPLICATION(S)

This application claims priority to Chinese Application No. 202211376541.5, filed on November 04, 2022, and the disclosure of which is incorporated herein by reference in its entirety.

### FIELD

The present disclosure relates to the field of data processing, and particularly to a video generation method, apparatus and device, and a storage medium.

### BACKGROUND

At present, during a video production process, more and more users use recorded pictures of video calls as materials for later video production.

However, when a user produces a video of a type of a video call, the user usually needs to manually record pictures of a video call, perform operations such as editing on the recorded pictures of the video call, so as to obtain a material for producing the video of the type of a video call, and then perform video production based on the material, leading to a fact that the video production process is relatively troublesome, thus affecting the user experience. In this way, how to simplify the production process of the video of the type of a video call to improve the user experience becomes a technical problem to be solved urgently.

### SUMMARY

To solve the above technical problem, an embodiment of the present disclosure provides a video generation method.

In a first aspect, the present disclosure provides a video generation method, including:
sending a video call recording application request to a server in response to a video call recording application operation acting on a video call page, wherein the video call recording application request is used for requesting the server to record a plurality of video streams corresponding to a video call picture on the video call page;
receiving a recording termination operation for the video call picture on the video call page, and obtaining a recording result material corresponding to the video call picture from the server, wherein the recording result material includes a video material and/or an image material determined based on recording results of the plurality of video streams; and
generating a result video corresponding to the video call picture based on the recording result material corresponding to the video call picture.

In an optional implementation, generating the result video corresponding to the video call picture based on the recording result material corresponding to the video call picture includes:
presenting, on a material selection page, the recording result material corresponding to the video call picture; and
generating the result video corresponding to the video call picture based on at least one material selected from the recording result material.

In an optional implementation, generating the result video corresponding to the video call picture based on the at least one material selected from the recording result material includes:
generating the result video corresponding to the video call picture based on at least one material selected from the recording result material and a target video template, wherein the target video template is a preset video template or a video template selected from a plurality of video templates.

In a second aspect, the present disclosure further provides a video generation method, including:
recording a plurality of video streams corresponding to a first video call to obtain a recording result corresponding to each video stream;
obtaining a recording result material corresponding to the first video call based on the recording result corresponding to each video stream, wherein the recording result material includes a video material and/or an image material; and
sending the recording result material corresponding to the first video call to at least one participation end of the first video call, wherein the recording result material is used for generating a result video corresponding to the first video call.

In an optional implementation, before recording the plurality of video streams corresponding to the first video call, so as to obtain the recording result corresponding to each video stream, the method further includes:
receiving a video call recording application request for the first video call; and
correspondingly, before sending the recording result material corresponding to the first video call to the at least one participation end of the first video call, the method further includes:
receiving a recording termination request for the first video call.

In an optional implementation, obtaining the recording result material corresponding to the first video call based on the recording result corresponding to each video stream includes:
extracting, from a recording result corresponding to a first video stream, a video clip and/or an image whose pixel definition meets a first preset condition, to serve as the recording result material corresponding to the first video call.

In an optional implementation, obtaining the recording result material corresponding to the first video call based on the recording result corresponding to each video stream includes:
based on the number of call participants corresponding to the first video call, extracting, from a recording result corresponding to a second video stream, a video clip and/or an image which meets the condition of the number of participants, to serve as the recording result material corresponding to the first video call.

In an optional implementation, obtaining the recording result material corresponding to the first video call based on the recording result corresponding to each video stream includes:
respectively obtaining images belonging to the same moment from at least two video streams, and synthesizing the images belonging to the same moment onto the same image according to a preset typesetting style, so as to obtain a synthetic result image to serve as an image material corresponding to the first video call.

In a third aspect, the present disclosure provides a video generation apparatus, including:
a first sending module, configured to: send a video call recording application request to a server in response to a video call recording application operation acting on a video call page, wherein the video call recording application request is used for requesting the server to record a plurality of video streams corresponding to a video call picture on the video call page;
a first receiving module, configured to receive a recording termination operation for the video call picture on the video call page, and obtain a recording result material corresponding to the video call picture from the server, wherein the recording result material includes a video material and/or an image material determined based on recording results of the plurality of video streams; and
a generation module, configured to generate a result video corresponding to the video call picture based on the recording result material corresponding to the video call picture.

In a fourth aspect, the present disclosure further provides a video generation apparatus, including:
a recording module, configured to record a plurality of video streams corresponding to a first video call, so as to obtain a recording result corresponding to each video stream;
an acquisition module, configured to obtain a recording result material corresponding to the first video call based on the recording result corresponding to each video stream, wherein the recording result material includes a video material and/or an image material; and
a second sending module, configured to send the recording result material corresponding to the first video call to at least one participation end of the first video call, wherein the recording result material is used for generating a result video corresponding to the first video call.

In a fifth aspect, the present disclosure provides a computer-readable storage medium, wherein instructions are stored in the computer-readable storage medium, and the instructions, when executed on a terminal device, cause the terminal device to implement the above method.

In a sixth aspect, the present disclosure provides a video generation device, including: a memory, a processor, and a computer program stored on the memory and executable on the processor, wherein the processor implements the above method when executing the computer program.

In a seventh aspect, the present disclosure provides a computer program product, including a computer program/instructions, wherein the computer program/instructions, when executed by a processor, implements the above method.

Compared with the prior art, the technical solutions provided in the embodiments of the present disclosure at least have the following advantages:
The embodiments of the present disclosure provide a video generation method, including: first, sending a video call recording application request to a server in response to a video call recording application operation acting on a video call page, wherein the video call recording application request is used for requesting the server to record a plurality of video streams corresponding to a video call picture on the video call page; next, receiving a recording termination operation for the video call picture on the video call page, and obtaining a recording result material corresponding to the video call picture from the server, wherein the recording result material includes a video material and/or an image material determined based on recording results of the plurality of video streams; and then, generating a result video corresponding to the video call picture based on the recording result material corresponding to the video call picture. It can be seen that in the embodiments of the present disclosure, during the process of a video call, the server may be requested to record the current video call, and the recording result material corresponding to the video call picture is directly obtained from the server, so that a user can generate the result video corresponding to the video call picture based on the recording result material, thereby simplifying the production process of a video of the type of a video call by the client user, and improving the user experience.

### BRIEF DESCRIPTION OF THE DRAWINGS

The drawings herein are incorporated in and constitute a part of the present specification, illustrate embodiments conforming to the present disclosure, and serve to explain the principles of the present disclosure together with the specification.

To illustrate technical solutions in the embodiments of the present disclosure or in the prior art more clearly, a brief introduction on the drawings which are needed in the description of the embodiments or the prior art is given below. Apparently, for those ordinary skilled in the art, other drawings may also be obtained according to these drawings without creative efforts.
FIG. 1 is a flowchart of a video generation method provided in an embodiment of the present disclosure;
FIG. 2 is a schematic diagram of a video call page provided in an embodiment of the present disclosure;
FIG. 3 is a flowchart of another video generation method provided in an embodiment of the present disclosure;
FIG. 4 is a flowchart of yet another video generation method provided in an embodiment of the present disclosure;
FIG. 5 is a schematic structural diagram of a video generation apparatus provided in an embodiment of the present disclosure;
FIG. 6 is a schematic structural diagram of another video generation apparatus provided in an embodiment of the present disclosure; and
FIG. 7 is a schematic structural diagram of a video generation device provided in an embodiment of the present disclosure.

### DETAILED DESCRIPTION OF EMBODIMENTS

In order to understand the above objectives, features and advantages of the present disclosure more clearly, the solutions of the present disclosure will be further described below. It should be noted that, in the case of no conflict, the embodiments of the present disclosure and features in the embodiments may be combined with each other.

In the following description, numerous specific details are set forth to fully understand the present disclosure, but the present disclosure may also be implemented in other manners different from those described herein; and obviously, the embodiments in the specification are only a part, but not all, of the embodiments of the present disclosure.

In order to simplify the production process of a video of the type of a video call to improve the user experience, an embodiment of the present disclosure provides a video generation method.

Specifically, first, a video call recording application request is sent to a server in response to a video call recording application operation acting on a video call page, wherein the video call recording application request is used for requesting the server to record a plurality of video streams corresponding to a video call picture on the video call page; next, a recording termination operation for the video call picture on the video call page is received, and a recording result material corresponding to the video call picture is obtained from the server, wherein the recording result material includes a video material and/or an image material determined based on recording results of the plurality of video streams; and then, a result video corresponding to the video call picture is generated based on the recording result material corresponding to the video call picture. It can be seen that in the embodiment of the present disclosure, during the process of a video call, the server may be requested to record the current video call, and the recording result material corresponding to the video call picture is directly obtained from the server, so that a user can generate the result video corresponding to the video call picture based on the recording result material, thereby simplifying the production process of the video of the type of a video call by the client user, and improving the user experience.

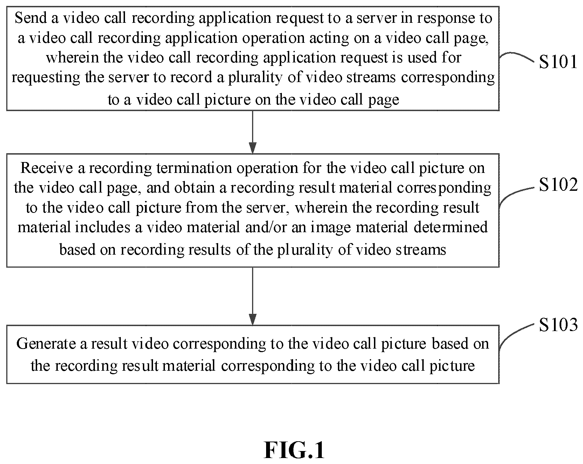

In view of this, an embodiment of the present disclosure provides a video generation method, which is applied to a client. Referring to FIG. 1, it is a flowchart of a video generation method provided in an embodiment of the present disclosure, and the method includes:
S101: sending a video call recording application request to a server in response to a video call recording application operation acting on a video call page.

In the video generation method provided in the embodiment of the present disclosure, the video call recording application request is used for requesting the server to record a plurality of video streams corresponding to a video call picture on the video call page.

In the embodiment of the present disclosure, the plurality of video streams corresponding to the video call picture refer to video streams respectively corresponding to a plurality of participants participating in a video call currently. Assuming that the plurality of participants participating in the video call currently are a user A and a user B, when the user A and the user B make a video call, the plurality of video streams corresponding to the video call picture refer to video data information corresponding to the user A during the video call process, and video data information corresponding to the user B during the video call process.

It should be noted that, for ease of understanding, the plurality of participants of the video call are described by taking the user A and the user B as examples.

In the embodiment of the present disclosure, the video call recording application operation may be implemented by triggering a creation control on the video call page, and specifically, the video call recording application request is sent to the server after a trigger operation for the creation control on the video call page is received.

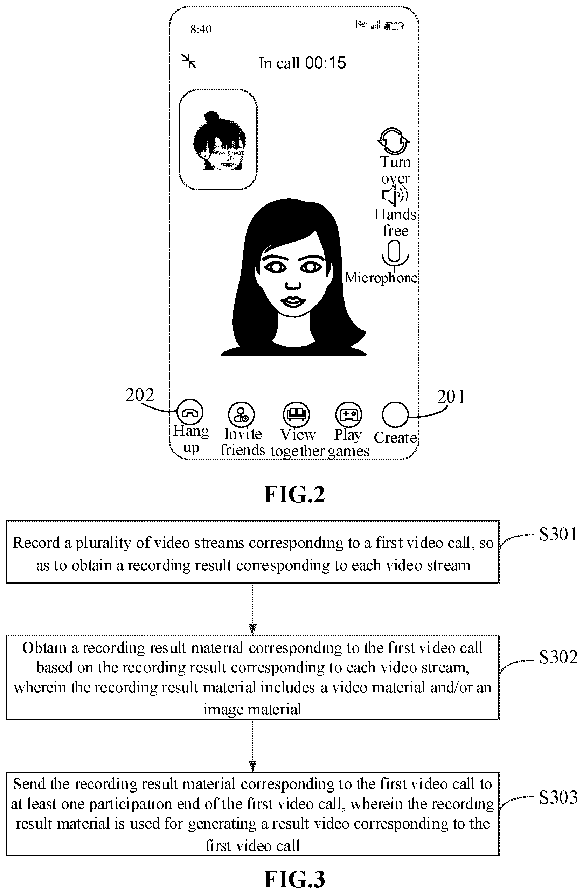

In order to more clearly understand the embodiments of the present disclosure, referring to FIG. 2, it is a schematic diagram of a video call page provided in an embodiment of the present disclosure, as shown in FIG. 2, a creation control 201 is displayed on the page, and the user may trigger a server to send the video call recording application request by clicking on the creation control 201.

S102: receiving a recording termination operation for the video call picture on the video call page, and obtaining a recording result material corresponding to the video call picture from the server.

The recording result material includes a video material and/or an image material determined based on recording results of the plurality of video streams.

Specifically, the recording results of the plurality of video streams refer to the recording results of video streams corresponding to the video call picture on the current video call page. It is still taken as an example that the plurality of participants participating in the video call currently is the user A and the user B, the recording results of the plurality of video streams are a recording result of a video stream corresponding to the user A during the video call process, and a recording result of a video stream corresponding to the user B during the video call process.

The video material refers to at least one video clip extracted from the recording results of the plurality of video streams corresponding to the video call picture on the current video call page.

The image material refers to at least one picture extracted from the recording results of the plurality of video streams corresponding to the video call picture on the current video call page.

It should be noted that, for the extraction manner of the video material and the image material, reference is made to the following embodiments, and thus details are not described in the present disclosure.

In the embodiment of the present disclosure, the recording termination operation of the pictures of the video call may be implemented in a plurality of manners, the following implementations are all examples, and the implementation manner of the recording termination operation of the video call picture is not limited in the embodiment of the present disclosure.

In one optional implementation, the recording termination operation of the video call picture may continue to be implemented by triggering the creation control on the video call page, specifically, during the process of recording the video call picture, if wanting to terminate the recording of the video call picture, the user may continue to trigger the creation control on the video call page to terminate the recording of the video call picture.

In another optional implementation, the recording termination operation of the video call picture may also be implemented by triggering a hang-up control on the video call page, and specifically, the recording of the video call picture is terminated after a trigger operation for the hang-up control on the video call page is received.

With continued reference to FIG. 2, the user may terminate the recording of the video call picture by clicking on a hang-up control 201, and trigger the server to determine the video material and/or the image material based on the recording results of the plurality of video streams.

Further, the client may obtain the recording result material corresponding to the video call picture from the server in the following several manners:
In one optional implementation, after receiving the recording termination operation for the video call picture on the video call page, the video call page is returned to a chat page, the recording result material corresponding to the video call picture is generated on the server and is sent to the chat page in the form of a notification, the user may skip to a material display interface after clicking on the notification, all recording result materials corresponding to the video call picture, which are sent by the server, are presented on the material display interface.

In another optional implementation, after receiving the recording termination operation for the video call picture on the video call page and generating the recording result material corresponding to the video call picture on the server, a message of "the recording result material has been successfully recorded, please view details" is generated in the form of a pop-up window, the user may skip to the material display interface after clicking on the message, and all recording result materials corresponding to the video call picture, which are sent by the server, are presented on the material display interface.

It should be noted that the manner of the client obtaining the recording result material corresponding to the video call picture from the server is not limited in the embodiment of the present disclosure.

S103: generating a result video corresponding to the video call picture based on the recording result material corresponding to the video call picture.

The result video corresponding to the video call picture is a video including the video call picture.

In the embodiment of the present disclosure, after obtaining the recording result material corresponding to the video call picture from the server, the user may generate the result video corresponding to the video call picture directly based on the recording result material corresponding to the video call picture, without the need to call a local album and the like to select the material, thereby improving the user experience.

In one optional implementation, after the user obtains the recording result material corresponding to the video call picture from the server, the recording result material corresponding to the video call picture is presented on a material selection page, and the result video corresponding to the video call picture is generated based on at least one material selected from the recording result material.

In the embodiment of the present disclosure, after the recording result material corresponding to the video call picture is presented on the material selection page, at least one material is selected from the recording result material according to the requirements of the user, so as to generate the result video corresponding to the video call picture.

Further, there are a plurality of manners for generating the result video corresponding to the video call picture based on the recording result material, in one optional implementation, the result video corresponding to the video call picture is generated based on at least one material selected from the recording result material and a target video template, and specifically, the at least one material selected from the recording result material is used to generate the result video corresponding to the video call picture according to the target video template.

The target video template is a preset video template or a video template selected from a plurality of video templates.

In another optional implementation, the result video corresponding to the video call picture is generated based on at least one material selected from the recording result material and a preset video generation control.

The preset video generation control is a preset video generation control, that is, by triggering the control, the result video corresponding to the video call picture is generated in a one-key manner according to the at least one material selected from the recording result material.

In the video generation method provided in the embodiment of the present disclosure, first, the video call recording application request is sent to the server in response to the video call recording application operation acting on the video call page, wherein the video call recording application request is used for requesting the server to record the plurality of video streams corresponding to the video call picture on the video call page; next, the recording termination operation for the video call picture on the video call page is received, and the recording result material corresponding to the video call picture is obtaind from the server, wherein the recording result material includes the video material and/or the image material determined based on the recording results of the plurality of video streams; and then, the result video corresponding to the video call picture is generated based on the recording result material corresponding to the video call picture. It can be seen that in the embodiment of the present disclosure, during the process of a video call, the server may be requested to record the current video call, and the recording result material corresponding to the video call picture is directly obtaind from the server, so that the user can generate the result video corresponding to the video call picture based on the recording result material, thereby simplifying the production process of a video of the type of a video call by the client user, and improving the user experience.

Based on the above method embodiment, an embodiment of the present disclosure further provides a video generation method, which is applied to a server. Referring to FIG. 3, it is a flowchart of another video generation method provided in an embodiment of the present disclosure, and the method includes:
S301: recording a plurality of video streams corresponding to a first video call, so as to obtain a recording result corresponding to each video stream.

The first video call may be any video call, for example, a video call between the user A and the user B, and correspondingly, the plurality of video streams corresponding to the first video call are video streams respectively corresponding to the user A and the user B.

Specifically, the video stream corresponding to the user A refers to a set of each frame of video call picture corresponding to the user A during a video call, and the video stream corresponding to the user B refers to a set of each frame of video call picture corresponding to the user B during the video call.

In the embodiment of the present disclosure, in order to ensure the data security of each participant of the first video call, before the plurality of video streams corresponding to the first video call are recorded, it is necessary to receive authorization of each participant of the first video call, and in a case where each participant authorizes to record the current video call, a server may record the plurality of video streams corresponding to the first video call.

Exemplarily, assuming that the first video call is a video call between the user A and the user B, when the user A has a recording requirement for a first video call picture, a message whether to agree to record the video call picture is sent to the user B based on the server at first, after the user B receives the message and selects "Agree", a message of "the other party has agreed to record the video call picture" is sent to the user A based on the server, the user A sends a video call recording application request to the server after receiving the message, and at this time, the server may record the plurality of video streams corresponding to the first video call.

In an optional implementation, after receiving the video call recording application request for the first video call, the server records the plurality of video streams corresponding to the first video call, so as to obtain the recording result corresponding to each video stream.

S302: obtaining a recording result material corresponding to the first video call based on the recording result corresponding to each video stream.

The recording result material includes a video material and/or an image material.

Specifically, there are a plurality of manners for obtaining the recording result material corresponding to the first video call based on the recording result corresponding to each video stream, the following acquisition manners are all examples, and the manner of obtaining the recording result material corresponding to the first video call is not limited in the embodiment of the present disclosure.

In an optional implementation, a video clip and/or an image whose pixel definition meets a first preset condition is extracted from a recording result corresponding to a first video stream, to serve as the recording result material corresponding to the first video call.

The first video stream may be any video stream in the first video call.

The first preset condition refers to a preset condition of pixel definition, for example, the first preset condition may be that a pixel value of each frame of image of the extracted video clip reaches a preset threshold value, a pixel value of the extracted image reaches the preset threshold value, etc.

In the embodiment of the present disclosure, at least one video clip whose pixel definition meets the first preset condition is extracted from the recording result corresponding to the first video stream, to serve as the recording result material corresponding to the first video call.

In another embodiment of the present disclosure, at least one image whose pixel definition meets the first preset condition is extracted from the recording result corresponding to the first video stream, to serve as the recording result material corresponding to the first video call.

In yet another embodiment of the present disclosure, at least one video clip and at least one image, whose pixel definitions meet the first preset condition, are extracted from the recording result corresponding to the first video stream, to serve as the recording result material corresponding to the first video call.

In another optional implementation, based on the number of call participants corresponding to the first video call, a video clip and/or an image which meets the condition of the number of participants is extracted from a recording result corresponding to a second video stream, to serve as the recording result material corresponding to the first video call.

The second video stream may be any video stream in the first video call.

The number of call participants refers to the number of people, who participate in the video call, corresponding to the participants in the first video call.

For ease of understanding, it is still taken as an example for description that the first video call is the video call between the user A and the user B, it is assumed that the video stream corresponding to the user A is the second video stream, the number of participants of the call for the user A is 3 persons and the number of participants of the call for the user B is 2 persons, then after obtaining the video stream corresponding to the user A (i.e., the second video stream), a video clip and/or an image which meets the condition of the number of participants is extracted from the recording result of the video stream corresponding to the user A based on the number of participants of the call for the user A, since the number of participants of the call for the user A is 3 persons, when the video clip and/or the image is extracted, a video clip and/or an image including all participants of the call for the user A may be used as the recording result material corresponding to the first video call.

In another optional implementation, based on a scenario corresponding to the first video call, a video clip and/or an image related to the scenario is extracted from a recording result corresponding to a third video stream, to serve as the recording result material corresponding to the first video call.

The third video stream may be any video stream in the first video call.

In the embodiment of the present disclosure, assuming that the scenario corresponding to the first video call is a restaurant, then a video clip and/or an image carrying food may be extracted from the recording result corresponding to the third video stream, to serve as the recording result material corresponding to the first video call.

In another optional implementation, images belonging to the same moment are respectively obtained from at least two video streams, and the images belonging to the same moment are synthesized onto the same image according to a preset typesetting style, so as to obtain a synthetic result image to serve as an image material corresponding to the first video call.

The images belonging to the same moment refer to images corresponding to the same time in the at least two video streams corresponding to the first video call.

The preset typesetting style is a preset typesetting style, such as a horizontal typesetting style, a vertical typesetting style, etc.

It is still taken as an example for description that the first video call is the video call between the user A and the user B, that is, at least two video streams corresponding to the first video call are the video stream corresponding to the user A and the video stream corresponding to the user B, then after the recording result of the video stream corresponding to the user A and the recording result of the video stream corresponding to the user B are obtained, images respectively belonging to the same moment are obtained, and the images belonging to the same moment are integrated onto the same image according to the preset typesetting style, so as to obtain a synthetic result image to serve as an image material corresponding to the first video call.

S303: sending the recording result material corresponding to the first video call to at least one participation end of the first video call.

The recording result material is used for generating a result video corresponding to the first video call.

In the embodiment of the present disclosure, after receiving a recording termination request for the first video call, the server sends the recording result material corresponding to the first video call to at least one participant end of the first video call, so that the client can generate the result video corresponding to the first video call based on the recording result material corresponding to the first video call.

In the video generation method provided in the embodiment of the present disclosure, the server first records a plurality of video streams corresponding to a first video call, so as to obtain a recording result corresponding to each video stream, then obtains a recording result material corresponding to the first video call based on the recording result corresponding to each video stream, wherein the recording result material includes a video material and/or an image material, and sends the recording result material corresponding to the first video call to at least one participation end of the first video call, wherein the recording result material is used for generating a result video corresponding to the first video call. It can be seen that in the embodiment of the present disclosure, the plurality of video streams corresponding to the first video call are recorded, and the recording result material corresponding to the first video call is extracted from the recording result corresponding to each video stream, so that the user can obtain the recording result material corresponding to the first video call from the server, and then generate the result video corresponding to the first video call directly based on the recording result material, thereby simplifying the production process of a video of the type of a video call by the client user, and improving the user experience.

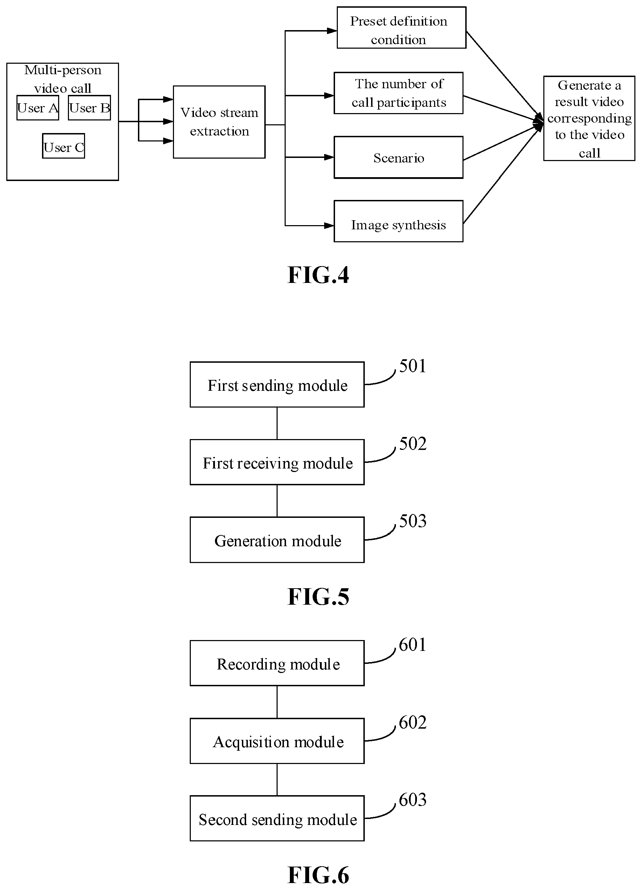

In order to further understand the above embodiments, a multi-person video call scenario is taken as an example. Referring to FIG. 4, it is a flowchart of still another video generation method provided in an embodiment of the present disclosure, as shown in FIG. 4, when the user A, the user B and a user C perform a video call, any user may trigger a multi-person video call recording application operation, assuming that the user A triggers the multi-person video call recording application operation, then the user A sends a message of whether recording a video call picture to the user B and the user C based on a server, after the user B and the user C respectively receive the message and select consent, a message of "the other party has agreed to record the video call picture" is sent to the user A based on the server, the user A sends a video call recording application request to the server after receiving the consent messages of the user B and the user C, and at this time, the server records a plurality of video streams corresponding to a plurality of video calls.

Specifically, the server records a multi-person video call to obtain a recording result of a video stream corresponding to the user A, a recording result of a video stream corresponding to the user B, and a recording result of a video stream corresponding to the user C, and then obtains a recording result material corresponding to the multi-person video call based on the recording results respectively corresponding to the user A, the user B and the user C.

Manner 1: selecting at least one recording result from the recording results corresponding to the user A, the user B and the user C, and extracting a video clip and/or an image whose pixel definition meets a first preset condition, to serve as a recording result material corresponding to the multi-person video call.

Manner 2: based on the numbers of participants corresponding to the user A, the user B and the user C, selecting at least one recording result from the recording results corresponding to the user A, the user B and the user C, and extracting a video clip and/or an image meeting the condition of the number of call participants, to serve as the recording result material corresponding to the multi-person video call.

Manner 3: based on a scenario corresponding to the multi-person video call, selecting at least one recording result from the recording results corresponding to the user A, the user B and the user C, and extracting a video clip and/or an image related to the scenario, to serve as the recording result material corresponding to the multi-person video call.

Manner 4: selecting at least two video streams from video streams corresponding to the user A, the user B and the user C, respectively obtaining images belonging to the same moment from the at least two video streams, and synthesizing the images belonging to the same moment onto the same image according to a preset typesetting style, so as to obtain a synthetic result image to serve as an image material corresponding to the multi-person video call.

After a video material corresponding to the multi-person video call is obtained, the recording result material corresponding to the first video call is sent to at least one of the user A, the user B and the user C, so that the user who has sent the recording result material corresponding to the first video call can generate a result video corresponding to the multi-person video call based on the recording result material corresponding to the multi-person video call.

Based on the above method embodiments, the present disclosure further provides a video generation apparatus, which is applied to a client. Referring to FIG. 5, it is a schematic structural diagram of a video generation apparatus provided in an embodiment of the present disclosure, and the apparatus includes:
a first sending module 501, configured to: send a video call recording application request to a server in response to a video call recording application operation acting on a video call page, wherein the video call recording application request is used for requesting the server to record a plurality of video streams corresponding to a video call picture on the video call page;
a first receiving module 502, configured to receive a recording termination operation for the video call picture on the video call page, and obtain a recording result material corresponding to the video call picture from the server, wherein the recording result material includes a video material and/or an image material determined based on recording results of the plurality of video streams; and
a generation module 503, configured to generate a result video corresponding to the video call picture based on the recording result material corresponding to the video call picture.

In an optional implementation, the generation module includes:
a presentation sub-module, configured to present, on a material selection page, the recording result material corresponding to the video call picture; and
a generation sub-module, configured to generate the result video corresponding to the video call picture based on at least one material selected from the recording result material.

In an optional implementation, the generation sub-module is specifically configured to:
generate the result video corresponding to the video call picture based on at least one material selected from the recording result material and a target video template, wherein the target video template is a preset video template or a video template selected from a plurality of video templates.

In the video generation apparatus provided in the embodiment of the present disclosure, first, the video call recording application request is sent to the server in response to the video call recording application operation acting on the video call page, wherein the video call recording application request is used for requesting the server to record the plurality of video streams corresponding to the video call picture on the video call page; next, the recording termination operation for the video call picture on the video call page is received, and the recording result material corresponding to the video call picture is obtained from the server, wherein the recording result material includes the video material and/or the image material determined based on the recording results of the plurality of video streams; and then, the result video corresponding to the video call picture is generated based on the recording result material corresponding to the video call picture. It can be seen that in the embodiment of the present disclosure, during the process of a video call, the server may be requested to record the current video call, and the recording result material corresponding to the video call picture is directly obtained from the server, so that the user can generate the result video corresponding to the video call picture based on the recording result material, thereby simplifying the production process of a video of the type of a video call by the client user, and improving the user experience.

Based on the above method embodiments, the present disclosure further provides a video generation apparatus, which is applied to a client. Referring to FIG. 6, it is a schematic structural diagram of another video generation apparatus provided in an embodiment of the present disclosure, and the apparatus includes:
a recording module 601, configured to record a plurality of video streams corresponding to a first video call, so as to obtain a recording result corresponding to each video stream;
an acquisition module 602, configured to obtain a recording result material corresponding to the first video call based on the recording result corresponding to each video stream, wherein the recording result material includes a video material and/or an image material; and
a second sending module 603, configured to send the recording result material corresponding to the first video call to at least one participation end of the first video call, wherein the recording result material is used for generating a result video corresponding to the first video call.

In an optional implementation, the apparatus further includes:
a second receiving module, configured to receive a video call recording application request for the first video call; and
correspondingly, the apparatus further includes:
a third receiving module, configured to receive a recording termination request for the first video call.

In an optional implementation, the acquisition module is specifically configured to:
extract, from a recording result corresponding to a first video stream, a video clip and/or an image whose pixel definition meets a first preset condition, to serve as the recording result material corresponding to the first video call.

In an optional implementation, the acquisition module is specifically configured to:
based on the number of call participants corresponding to the first video call, extract, from a recording result corresponding to a second video stream, a video clip and/or an image which meets the condition of the number of participants, to serve as the recording result material corresponding to the first video call.

In an optional implementation, the acquisition module is specifically configured to:
respectively obtain images belonging to the same moment from at least two video streams, and synthesize the images belonging to the same moment onto the same image according to a preset typesetting style, so as to obtain a synthetic result image to serve as an image material corresponding to the first video call.

In the video generation apparatus provided in the embodiment of the present disclosure, the server first records a plurality of video streams corresponding to a first video call, so as to obtain a recording result corresponding to each video stream, then obtains a recording result material corresponding to the first video call based on the recording result corresponding to each video stream, wherein the recording result material includes a video material and/or an image material, and sends the recording result material corresponding to the first video call to at least one participation end of the first video call, wherein the recording result material is used for generating a result video corresponding to the first video call. It can be seen that in the embodiment of the present disclosure, the plurality of video streams corresponding to the first video call are recorded, and the recording result material corresponding to the first video call is extracted from the recording result corresponding to each video stream, so that the user can obtain the recording result material corresponding to the first video call from the server, and then generate the result video corresponding to the first video call directly based on the recording result material, thereby simplifying the production process of a video of the type of a video call by the client user, and improving the user experience.

In addition to the above methods and apparatuses, an embodiment of the present disclosure further provides a computer-readable storage medium, wherein an instruction is stored in the computer-readable storage medium, and when the instruction runs on a terminal device, the terminal device is caused to implement the video generation method according to the embodiments of the present disclosure.

An embodiment of the present disclosure further provides a computer program product, including a computer program/instruction, wherein the computer program/instruction, when executed by a processor, implements the video generation method according to the embodiments of the present disclosure.

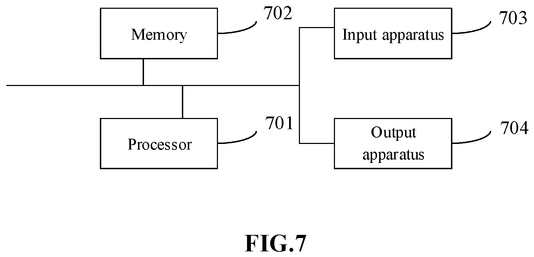

In addition, an embodiment of the present disclosure further provides a video generation device, as shown in FIG. 7, which may include:
a processor 701, a memory 702, an input apparatus 703 and an output apparatus 704. There may be one or more processors 701 in the video generation device, and one processor is taken as an example in FIG. 7. In some embodiments of the present disclosure, the processor 701, the memory 702, the input apparatus 703 and the output apparatus 704 may be connected by using buses or other manners, wherein a connection by using buses is taken as an example in FIG. 7.

The memory 702 may be configured to store software programs and modules, and the processor 701 executes various functional applications and data processing of the video generation device by running the software programs and the modules stored in the memory 702. The memory 702 may mainly include a program storage area and a data storage area, wherein the program storage area may store an operating system, an application program required by at least one function, and the like. In addition, the memory 702 may include a high-speed random access memory, and may further include a non-volatile memory, for example, at least one magnetic disk storage device, a flash memory device, or other volatile solid-state storage devices. The input apparatus 703 may be configured to receive input digital or character information, and generate a signal input related to user settings and function control of the video generation device.

Specifically, in the present embodiment, the processor 701 loads, into the memory 702, an executable file corresponding to processes of one or more application programs according to the following instructions, and the processor 701 runs the application program stored in the memory 702 to implement various functions of the above video generation device.

It should be noted that relational terms herein, such as "first", "second" and the like, are merely used for distinguishing one entity or operation from another entity or operation, and do not necessarily require or imply that any such actual relationship or order exists between these entities or operations. Moreover, the terms "include", "contain" or any other variants thereof are intended to cover non-exclusive inclusions, such that a process, a method, an article or a device including a series of elements not only includes those elements, but also includes other elements that are not explicitly listed, or also includes elements inherent to such a process, method, article or device. If there are no more restrictions, the element defined by the sentence "including a..." does not exclude the existence of other identical elements in the process, the method, the article or the device that includes the element.

The foregoing descriptions are merely specific implementations of the present disclosure, and to enable those skilled in the art to understand or implement the present disclosure. Various modifications to these embodiments will be readily apparent to those skilled in the art, and the generic principles defined herein may be implemented in other embodiments without departing from the spirit or scope of the present disclosure. Thus, the present disclosure will not be limited to these embodiments described herein, but will conform to the widest scope consistent with the principles and novel features disclosed herein.

## Claims

1. A video generation method, comprising:
sending, in response to a video call recording application operation acting on a video call page, a video call recording application request to a server, wherein the video call recording application request is used for requesting the server to record a plurality of video streams corresponding to a video call picture on the video call page;
receiving a recording termination operation for the video call picture on the video call page, and obtaining a recording result material corresponding to the video call picture from the server, wherein the recording result material comprises a video material and/or an image material determined based on recording results of the plurality of video streams; and
generating, based on the recording result material corresponding to the video call picture, a result video corresponding to the video call picture.

2. The method according to claim 1, wherein generating, based on the recording result material corresponding to the video call picture, the result video corresponding to the video call picture comprises:
presenting, on a material selection page, the recording result material corresponding to the video call picture; and
generating, based on at least one material selected from the recording result material, the result video corresponding to the video call picture.

3. The method according to claim 1, wherein generating, based on at least one material selected from the recording result material, the result video corresponding to the video call picture comprises:
generating the result video corresponding to the video call picture based on at least one material selected from the recording result material and a target video template, wherein the target video template is a preset video template or a video template selected from a plurality of video templates.

4. A video generation method, comprising:
recording a plurality of video streams corresponding to a first video call, so as to obtain a recording result corresponding to each video stream;
obtaining a recording result material corresponding to the first video call based on the recording result corresponding to each video stream, wherein the recording result material comprises a video material and/or an image material; and
sending the recording result material corresponding to the first video call to at least one participation end of the first video call, wherein the recording result material is used for generating a result video corresponding to the first video call.

5. The method according to claim 4, wherein before recording the plurality of video streams corresponding to the first video call, so as to obtain the recording result corresponding to each video stream, the method further comprises:
receiving a video call recording application request for the first video call; and
correspondingly, before sending the recording result material corresponding to the first video call to the at least one participation end of the first video call, the method further comprises:
receiving a recording termination request for the first video call.

6. The method according to claim 4, wherein obtaining the recording result material corresponding to the first video call based on the recording result corresponding to each video stream comprises:
extracting, from a recording result corresponding to a first video stream, a video clip and/or an image whose pixel definition meets a first preset condition, to serve as the recording result material corresponding to the first video call.

7. The method according to claim 4, wherein obtaining the recording result material corresponding to the first video call based on the recording result corresponding to each video stream comprises:
based on the number of call participants corresponding to the first video call, extracting, from a recording result corresponding to a second video stream, a video clip and/or an image which meets a condition of the number of participants, to serve as the recording result material corresponding to the first video call.

8. The method according to claim 4, wherein obtaining the recording result material corresponding to the first video call based on the recording result corresponding to each video stream comprises:
respectively obtaining images belonging to the same moment from at least two video streams, and synthesizing the images belonging to the same moment onto the same image according to a preset typesetting style, so as to obtain a synthetic result image as an image material corresponding to the first video call.

9. A video generation apparatus, comprising:
a first sending module, configured to send a video call recording application request to a server in response to a video call recording application operation acting on a video call page, wherein the video call recording application request is used for requesting the server to record a plurality of video streams corresponding to a video call picture on the video call page;
a first receiving module, configured to receive a recording termination operation for the video call picture on the video call page, and obtain a recording result material corresponding to the video call picture from the server, wherein the recording result material comprises a video material and/or an image material determined based on recording results of the plurality of video streams; and
a generation module, configured to generate a result video corresponding to the video call picture based on the recording result material corresponding to the video call picture.

10. A video generation apparatus, comprising:
a recording module, configured to record a plurality of video streams corresponding to a first video call, so as to obtain a recording result corresponding to each video stream;
an acquisition module, configured to obtain a recording result material corresponding to the first video call based on the recording result corresponding to each video stream, wherein the recording result material comprises a video material and/or an image material; and
a second sending module, configured to send the recording result material corresponding to the first video call to at least one participation end of the first video call, wherein the recording result material is used for generating a result video corresponding to the first video call.

11. A computer-readable storage medium, wherein instructions are stored in the computer-readable storage medium, and the instructions, when executed on a terminal device, cause the terminal device to implement the method according to any of claims 1-8.

12. A video generation device, comprising: a memory, a processor, and a computer program stored on the memory and executable on the processor, wherein the processor implements the method according to any of claims 1-8 when executing the computer program.

13. A computer program product, comprising a computer program/instruction, wherein the computer program/instruction, when executed by a processor, implements the method according to any of claims 1-8.
